# NOUVEAU FASCICULE DE BREVET EUROPEEN

(11) **EP 0 572 322 B2**
(45) Date de publication et mention de la décision concernant l'opposition: **24.10.2001**
(45) Mention de la délivrance du brevet: 07.02.1996
(21) Numéro de dépôt: 93401355.8
(22) Date de dépôt: 27.05.1993
(51) Int. Cl.: F27B 7/20

(54) **Installation et procédé de précalcination de matières minérales quelconques**
Anlage und Verfahren zur Prekalzination von alle mineralen Gut
Installation and process for the precalcination of any mineral matters

(30) Priorité: 29.05.1992 FR 9206579
(43) Date de publication de la demande: 01.12.1993
(73) Titulaire: TECHNIP, 92400 Courbevoie (FR)
(72) Inventeur: Paliard, Maurice, F-42000 Saint-Etienne (FR)
(74) Mandataire: Bentz, Jean-Paul

(56) Documents cités:
- EP-A- 0 014 812
- EP-A- 0 440 281
- DE-A- 2 541 564
- DE-A- 3 701 967
- DE-A- 3 817 357
- DE-A- 4 337 068
- FR-A- 2 175 381
- FR-A- 2 261 236
- FR-A- 2 280 601
- US-A- 4 014 641
- US-A- 4 050 882
- Z.K.G vol. 38, no. 2, 1 Février 1985, pages 57-66 A.SCHEUER UND O.GARDEIK 'bildung und afbau von no in zementofenanlagen.'
- Ciments, Bétons, Plâtres et Chaux no. 769 - 6/87, pages 368-369
- Zement Kalk -gips no. 3/1988, pages 119-120
- Cement Data Book - DUDA - Vol. 1 - 3ème. édition 1985, pages 514
- Techniques de l'Ingénieur 2 - 1981 - Mécanique et Chaleur Chaudièrespages 117, 8-3 et 117, 8-4
- "Zement-Kalk-Gips" Nr. 5/1979, s. 211, 217, 219, 220
- "REVUE GENERALE DE THERMIQUE2 7 FR. NR. 248-249, Août-Septembre 1982, s. 671,677,685,686,688,689.
- Sonderdruck aus Zeitschrift "Zement-Kalk-Gips" 8/1981, S. 395-402
- "Zement-Kalk-Gips" 7/1986, S. 351, 364
- Chemical Engineers' Handbook 5th ed.
- The new CF*/FCB Low NO x precalciner, 1993, S. Jorget

## Description

La présente invention a pour premier objet une installation de précalcination de matières minérales quelconques, tels que par exemple, clinker de ciment, chaux, alumine, magnésie, ou dolomie.

Plus précisément, l'invention, selon son premier aspect, concerne une installation telle que définie par le préambule de la revendication 1.

Elle vise également un procédé de précalcination de telles matières.

On a déjà proposé des installations de précalcination de matières minérales comprenant notamment un précalcinateur essentiellement constitué d'une chambre de combustion alimentée en air chaud, d'une chambre de réaction communiquant avec la chambre de combustion et alimentée en fumées riches en oxydes d'azote provenant d'un four de cuisson, et d'un cyclone permettant la séparation de la matière et raccordé à la chambre de réaction par une conduite.

Il est possible de faire fonctionner ce genre d'installation en marche réductrice de façon à éliminer au moins partiellement les oxydes d'azote. Cependant, la réduction des oxydes d'azote est limitée, car, dans ces installations, on génère, en marche réductrice, beaucoup de carbone imbrûlé qui est pratiquement inactif pour la réduction des oxydes d'azote. En outre, ce carbone imbrûlé est difficile à réoxyder ultérieurement et est néfaste au bon fonctionnement du four de cuisson.

Une installation conforme au préambule de la revendication 1 est décrite dans le brevet US 4 014 641. Ce brevet antérieur concerne une installation dans laquelle les gaz chargés en oxydes d'azote issus d'un four de calcination sont mélangés, en vue de leur réduction, avec des gaz réducteurs issus d'une chambre de combustion à comburant déficitaire.

Pour éviter le rejet dans l'atmosphère du mélange gazeux ainsi obtenu, encore trop réducteur, le brevet US 4 014 641 préconise d'y injecter de l'air issu d'un refroidisseur.

Dans ce contexte, la présente invention a essentiellement pour but de proposer une installation et un procédé de précalcination ne présentant pas les inconvénients cités ci-dessus et permettant une réduction d'environ 30 à 70 % des oxydes d'azote générés par le four, grâce à l'efficacité de la chambre de combustion qui produit un maximum de gaz réducteur CO, H₂ pour un minimum de carbone imbrûlé, et qui provoque la réduction partielle Fe⁺⁺⁺ en Fe⁺⁺ dans les matières minérales, le carbone imbrûlé se trouvant sous la forme d'un coke fortement réactif.

A cet effet, l'installation de l'invention, par ailleurs conforme à la définition générique qu'en donne le préambule de la revendication 1, est principalement définie par les caractéristiques spécifiques énoncées dans la partie caractérisante de cette même revendication 1.

Selon un mode de réalisation préféré de cette installation, les fumées riches en oxydes d'azote sont injectées dans la chambre de réaction via une vanne de réglage, tandis qu'au moins une vanne règle le débit d'air chaud parvenant aux trois conduits précités, et que le deuxième et troisième conduits précités sont chacun munis d'au moins une vanne de réglage.

Le brûleur précité peut être constitué par au moins trois enveloppes concentriques qui depuis l'intérieur vers l'extérieur véhiculent respectivement un combustible d'appoint, de l'air sous pression et un combustible pulvérisé et transporté par un flux gazeux.

On précisera encore que l'air sous pression est avantageusement injecté dans la chambre de combustion par des buses tangentes à un hyperboloïde de révolution induisant un mouvement de rotation de même sens que celui de l'air chaud.

Le cône asymptote de l'hyperboloïde de révolution possède un angle au sommet compris entre 3 et 90°.

Cette invention vise encore un procédé de précalcination de matières minérales quelconques sous forme pulvérulente, tel que défini dans la revendication 7.

De préférence le premier flux représente de 50 à 75 % du flux d'air chaud total, le deuxième flux de 15 à 30 %, et le troisième flux de 15 à 30 %.

Ce procédé est encore avantageusement tel que la vitesse d'injection des fumées riches en oxydes d'azote dans la chambre de réaction est comprise entre 20 et 40 m/sec., la vitesse moyenne des filmées dans la chambre de réaction est comprise entre 5 et 20 m/sec., de préférence 10 à 15 m/sec. et la vitesse moyenne des fumées dans la conduite précitée en aval de l'injection du troisième flux d'air est comprise entre 8 et 24 m/sec., de préférence 12 à 18 m/sec.

On précisera encore ici que la vitesse axiale d'injection du combustible pulvérisé dans la chambre de combustion est comprise entre 10 et 30 m/sec, et de préférence entre 10 et 18 m/sec. tandis que l'air sous pression fourni par le brûleur est injecté dans ladite chambre à une vitesse supérieure à 75 m/sec, et de préférence supérieure à 150 m/sec.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est un schéma d'une installation de cuisson de matières minérales, dans laquelle est incorporé un précalcinateur selon cette invention ;
La figure 2 est une vue détaillée, mais schématique, de ce précalcinateur;
La figure 3 est une vue schématique et en coupe axiale du brûleur équipant la chambre de combustion du précalcinateur : et
La figure 4 est une vue en coupe suivant sensiblement la ligne IV-IV de la figure 3.

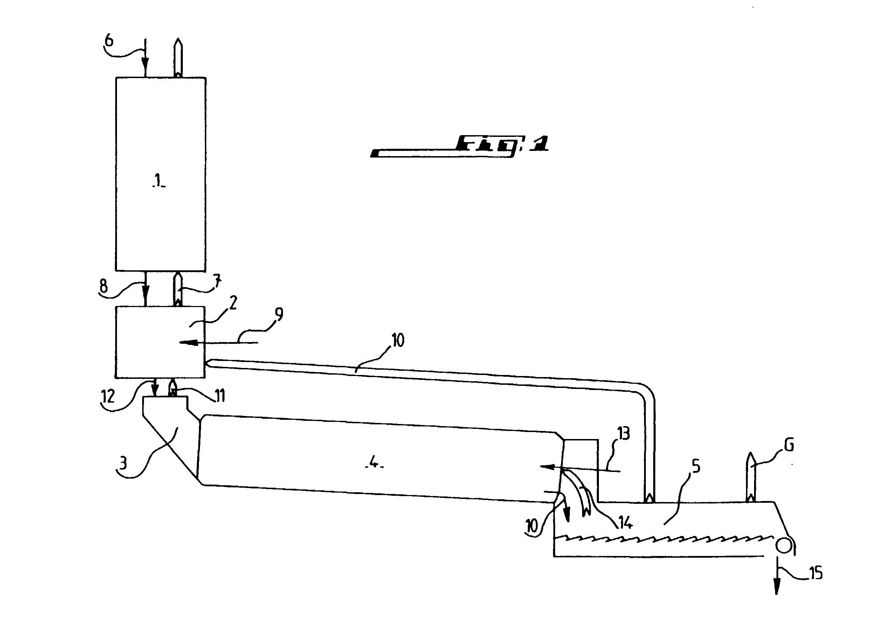

En se reportant à la figure 1, on voit une installation de cuisson de matières minérales dans laquelle la matière alimentée à l'état pulvérisé traverse successivement un préchauffeur 1, un précalcinateur 2, un four de cuisson 4, et un refroidisseur 5.

La matière pulvérisée est alimentée en 6 au préchauffeur 1 dans lequel les fumées chaudes 7 issues du précalcinateur 2 préchauffent ladite matière.

La matière chaude 8 sortant du préchauffeur 1 est partiellement calcinée dans le précalcinateur 2 par un apport d'énergie provenant d'une part de la conmbustion d'un combustible 9 avec de l'air préchauffé arrivant par une conduite 10 du refroidisseur 5 et d'autre part, des fumées 11 provenant du four 4 à travers une boîte de jonction 3.

La matière précalcinée 12 est alimentée au four 4 à travers la boîte de jonction 3 pour terminer la cuisson par un apport d'énergie provenant de la combustion d'un combustible 13 avec de l'air préchauffé 14 provenant du refroidisseur 5. Le produit cuit 10 (calciné, clinkérisé ou fondu suivant le matériau) sortant du four 4 est refroidi dans le refrodisseur 5 et évacué en 15.

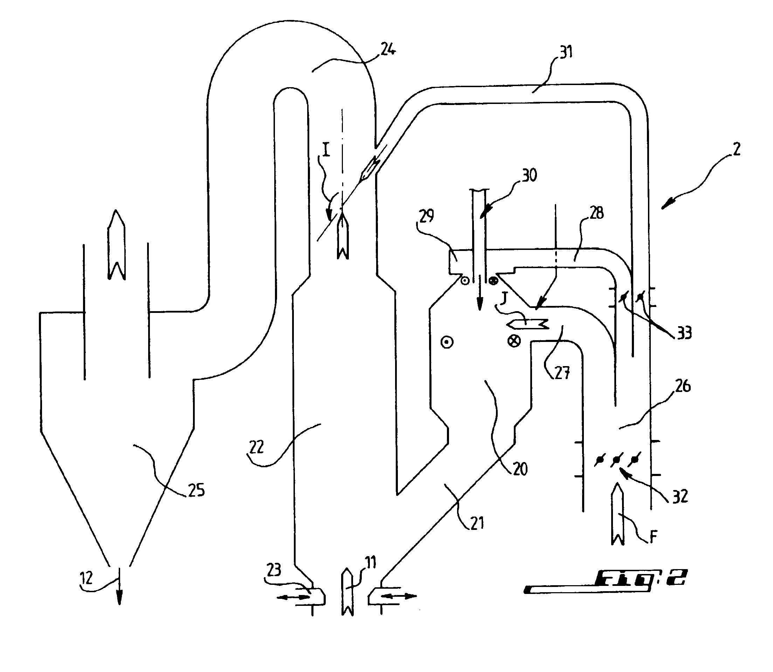

Au moins une partie de l'air chaud récupéré au refroidisseur 5, tel que celui passant dans la conduite 10, est utilisée comme air de combustion au précalcinateur 2. et comme matérialisé par la flèche F sur la figure 2.

La flèche G sur la figure 1 illustre l'excédent d'air chaud sortant du refroidisseur 5 et destiné à d'autres usages.

Sur la figure 2, on voit que le précalcinateur proprement dit se compose d'une chambre de combustion 20 reliée par une gaine 21 à une chambre de réaction 22. cette dernière étant reliée par l'intermédiaire d'une vanne 23 à la boîte de jonction 3 d'où sortent les fumées II pénétrant dans la chambre de réaction 22 à sa partie inférieure. A sa partie supérieure, la chambre de réaction 22 communique avec une conduite 24 de postcombustion, en forme de col de cygne, débouchant dans un cyclone 25 permettant la récupération du produit précalciné en 12.

Suivant une caractéristique essentielle de l'invention, l'air chaud F pénètre dans le précalcinateur 2 par une conduite 26 qui se subdivise en trois conduits, à savoir un premier conduit 27 débouchant tangentiellement dans la chambre de combustion 20, un deuxième conduit 28 débouchant à travers une volute 29 dans ladite chambre 20. au niveau d'un brûleur 30 équipant cette chambre, et d'un troisième conduit 31 débouchant dans la conduite 24 de raccordement de la chambre de réaction 22 au cyclone 25.

On observera ici que le premier conduit 27 et la volute 29 impriment à l'air chaud un même sens de rotation dans la chambre de combustion 20.

Le flux d'air chaud sortant du troisième conduit 31, et comme cela est illustré par des flèches, fait avec les fumées sortant de la chambre de réaction 22, et comme cela est matérialisé par la flèche 1 un angle supérieur à 60°. Cet angle sera avantageusement compris entre 140 et 160°.

On a montré en 32 un ensemble de vannes de réglage du débit d'air chaud parvenant d'une part via le premier conduit 27 à la chambre de combustion 20 (flèche J), et d'autre part aux deuxième et troisième conduits 28, 31. Dans chacun de ces conduits 28, 31, est installée une vanne de réglage 33.

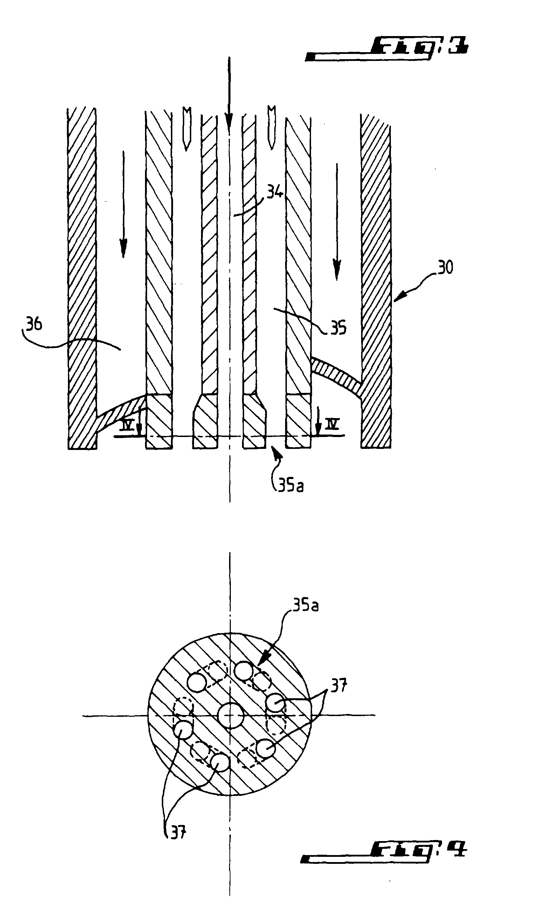

En se reportant maintenant à la figure 3, on voit que le brûleur 30 monté en partie haute de la chambre de combustion 20, dans l'axe de la volute 29, comprend essentiellement trois enveloppes concentriques et qui définissent depuis l'intérieur vers l'extérieur : un passage central 34 pour un combustible d'appoint qui peut être du fuel lourd ou des solvants de récupération, un canal 35 assurant l'injection d'air sous pression : et un autre canal 36 par où peut sortir un combustible pulvérisé tel que charbon, et transporté par un flux gazeux tel que air.

En se reportant à la figure 4, on voit que l'air sous pression est injecté dans la chambre de combustion 20 par une tête spéciale 35a comportant une pluralité de buses 37 d'axes tangents à un hyperboloïde de révolution induisant un mouvement de rotation de même sens que celui sortant de la volute 29 et que celui sortant du premier conduit 27.

On précisera ici que le cône assymptote de l'hyperboloïde de révolution en question présente un angle au sommet compris entre environ 3 et 90°, et de préférence compris entre 10 et 45°.

Ayant ainsi décrit l'installation de précalcination selon cette invention. on expliquera maintenant dans ce qui suit son fonctionnement en même temps que ses nombreux avantages. Pour obtenir l'effet recherché, c'est-à-dire une très forte diminution de la teneur en oxydes d'azote des fumées sortant du four de cuisson 4, il convient d'intervenir sur plusieurs paramètres, et notamment d'adopter une combinaison spécifique de paramètres.

Tout d'abord, au niveau de la chambre de combustion 20, qui doit fonctionner comme générateur de gaz réducteur, il faut stabiliser la flamme du brûleur 30 naturellement instable dans ces conditions, et c'est pourquoi, selon l'invention, on utilise, pour la chambre de combustion 20 un vortex de stabilisation de flamme constitué par la combinaison de la volute 29 avec la tête spéciale 35a d'injection d'air sous pression, et avec l'injection tangentielle d'air chaud en J. De plus, le contrôle du débit d'air dans le deuxième conduit 28 grâce à la vanne 33 permet d'obtenir une température maximum en sortie du brûleur 30, sans pour autant provoquer la fusion des matières minérales. Ces dispositions permettent avantageusement d'éviter les carbones imbrûlés à l'état solide et de favoriser la production de gaz réducteur acheminé dans la chambre de réaction 22 via la conduite 21.

Au niveau de cette chambre, l'injection à grande vitesse des fumées 11 grâce à la vanne 23, associée à une vitesse moyenne faible du mélange fumées-gaz réducteur dans cette chambre permet d'optimiser la cinétique de réaction de réduction par accroissement des turbulences dans ladite chambre. Ce résultat est obtenu en utilisant une vitesse de fumées comprise entre 20 et 40 m/sec., pour une vitesse moyenne dans la chambre de réaction 22 de 5 à 20 m/sec. Préférentiellement, la vitesse des fumées 11 est comprise entre 25 et 35 m/sec, et la vitesse moyenne dans la chambre 22 est comprise entre 10 et 15 m/sec.

Par ailleurs, au niveau de l'injection d'air chaud par la conduite 31 dans la conduite postcombustion 24, il convient aussi d'obtenir un mélange homogène de l'air oxydant et des fumées réductrices résiduelles. Ceci est assuré en utilisant une vitesse d'injection d'air chaud comprise entre 20 et 40 m/sec, et un angle d'injection supérieur à 60°. De plus, la vitesse moyenne, en aval du point d'injection du conduit 31, c'est-à-dire dans la conduite postcombustion 24, doit permettre un temps de séjour suffisant tout en maintenant un bon niveau de turbulence. C'est pourquoi, cette vitesse moyenne est choisie entre 8 et 24 m/sec, et de préférence entre 12 et 18 m/sec.

C'est ainsi qu'en choisissant par exemple d'envoyer 65% de l'air chaud par le premier conduit 27 dans la chambre de combustion 20, 15% d'air chaud par le conduit 28, dans la volute 29, et 20% d'air chaud dans la conduite 24 via le conduit 31, il est possible, en utilisant comme combustible dans le brûleur 30 un mélange de coke de pétrole et de charbon pulvérisé d'obtenir une réduction de la teneur en oxydes d'azote de 47% sur les fumées riches en oxydés d'azote provenant du four 4, tout en maintenant le taux d'imbrülés solides dans les matières sortant du cyclone 25 à moins de 4% de la totalité du combustible envoyé par le brûleur 30 à la chambre de combustion. Dans cet exemple particulier, la vitesse d'injection du combustible était de 15 m/sec, la vitesse de s fumées 11 était de 24 m/sec, la vitesse moyenne du mélange dans la chambre de réaction 22 était de 11,5 m/sec, et la vitesse dans la conduite post-combustion 24 était de 14 m/sec.

On a donc réalisé suivant l'invention une installation et un procédé de précalcination procurant des avantages exceptionnels notamment au regard de la réduction des émissions d'oxydes d'azote qui sont néfastes pour l'environnement.

Bien entendu, l'invention n'est nullement limitée au mode de réalisation décrit et illustré qui n'a été donné qu'à titre d'exemple.

## Revendications

1. Installation de précalcination de matières minérales sous forme pulvérulente préchauffée (8), notamment de clinker de ciment, comprenant un précalcinateur (2) recevant la matière préchauffée (8), alimenté en air chaud (F) par une conduite (10, 26) reliée à un refroidisseur (5) et subdivisée en au moins deux éléments de conduite (27, 28, 31), le précalcinateur (2) étant essentiellement constitué, d'une part, d'une chambre de combustion (20) formant générateur de gaz réducteurs et ayant un brûleur de combustible (30) monté sur la chambre de combustion (20) en partie haute de celle-ci dans l'axe d'une volute (29) entourant le brûleur (30), la chambre de combustion (20) étant alimentée en air chaud provenant du refroidisseur (5) par un premier élément de conduite, dit second conduit (28), raccordé au niveau dudit brûleur (30) et débouchant dans la chambre de combustion (20) à travers la volute (29), de façon à y conférer, à l'air chaud ainsi injecté, un mouvement de rotation suivant un premier sens, d'autre part, d'une chambre (22) de réaction par réduction d'oxydes d'azote, communiquant (21) avec ladite chambre de combustion (20) et alimentée (3) en fumées (11) riches en oxydes d'azote provenant d'un four de cuisson (4), ces fumées transitant par la chambre de réaction et étant mélangées à de l'air chaud acheminé par un second élément de conduite, dit troisième conduit d'air chaud (31), issu de la subdivision de ladite conduite d'air chaud (10,26) et, enfin, d'un cyclone (25) de séparation de la matière, raccordé à ladite chambre de réaction (22) par une conduite de postcombustion (24), dans laquelle débouche le troisième conduit d'air chaud (31), **caractérisée en ce qu'**elle comprend un troisième élément de conduite, dit premier conduit (27), issu de la subdivision de ladite conduite d'air chaud (10, 26), et débouchant tangentiellement dans ladite chambre de combustion (20) de façon à conférer, à l'air chaud (J) injecté par ce premier conduit (27), un mouvement de rotation suivant le premier sens, **en ce que** la conduite de post-combustion (24) est conformée en col de cygne, **en ce que** ledit brûleur (30) est un brûleur de combustible pulvérisé, tel que du charbon ou un mélange de coke de pétrole et de charbon pulvérisé, et de combustible d'appoint, et **en ce que** le troisième conduit d'air chaud (31) débouche dans la conduite (24) de raccordement au cyclone (25), de façon que le flux d'air chaud, sortant de ce troisième conduit (31), fasse, avec les fumées (11) sortant de la chambre de réaction (22), un angle (I) compris entre 140° et 160°.

2. Installation selon la revendication 1, **caractérisée en ce que** les fumées riches en oxydes d'azote sont injectées dans la chambre de réaction (22) via une vanne de réglage (23), tandis qu'au moins une vanne (32) règle le débit d'air chaud (F) parvenant aux trois conduits précités (27, 28, 31), et que ledit second conduit (28) et ledit troisième conduit (31) sont munis chacun d'au moins une vanne de réglage (33).

3. Installation selon la revendication 1 ou 2, **caractérisée en ce que** le brûleur précité (30) est constitué par au moins trois enveloppes concentriques définissant respectivement, de l'intérieur vers l'extérieur, un passage central (34), un canal (35) et un autre canal (36) qui véhiculent respectivement un combustible d'appoint, de l'air sous pression et un combustible pulvérisé transporté par un flux gazeux tel que l'air.

4. Installation selon la revendication 3, **caractérisée en ce que** l'air sous pression est injecté dans la chambre de combustion (20) par une pluralité de buses (37) d'axes tangents à un hyperboloïde de révolution, induisant un mouvement de rotation de même sens que celui de l'air chaud sortant respectivement de la volute (29) et dudit premier conduit (27).

5. Installation selon la revendication 4, **caractérisée en ce que** le cône asymptote de l'hyperboloïde de révolution a un angle au sommet compris entre 3° et 90° et de préférence entre 10° et 45°.

6. Installation selon la revendication 4 ou 5, **caractérisée en ce que** la pluralité des buses (37) appartient à une tête spéciale (35a) du brûleur (30).

7. Procédé de précalcination de matières minérales sous forme pulvérulente notamment de clinker de ciment, consistant à préchauffer (1) la matière et à calciner la matière préchauffée (8) dans un précalcinateur (2) alimenté en air chaud (F, 26) de refroidisseur (5) par une conduite (10, 26) subdivisée en trois flux (27, 28, 31) et comprenant, d'une part, une chambre de combustion (20) fonctionnant en générateur de gaz réducteurs tels que CO et H₂ et alimentée par un premier flux (27) raccordé tangentiellement à la chambre de combustion (20), de façon à conférer, à l'air chaud (J) de ce premier flux (27), un mouvement de rotation et par un second flux (28) dudit air chaud (F) arrivant au niveau d'un brûleur (30) de combustible pulvérisé et de combustible d'appoint, monté sur la chambre de combustion (20) et débouchant dans la chambre de combustion (20) à travers une volute (29), et conférant à l'air chaud le même sens de rotation que celui du premier flux (27), une chambre (22) de réaction par réduction d'oxydes d'azote, communiquant avec la chambre de combustion (20) et alimentée en filmées (11) riches en oxydes d'azote provenant (3) d'un four de cuisson (4) et, d'autre part, un cyclone (25) de séparation de la matière, raccordé à la chambre de réaction (22) par une conduite de raccordement (24) dans laquelle est injecté le troisième flux (31) dudit air chaud (F) et où une postcombustion a lieu, ledit premier flux (J, 27) dudit air chaud (F) représentant 40% à 85% du flux d'air chaud total (F), tandis que ledit second flux (28) représente 5% à 30% du flux d'air chaud total (F) et le troisième flux (31) représente 10% à 40% du flux total d'air chaud (F), ces débits d'air chaud étant obtenus respectivement par réglage (32, 33) des flux, et la température maximale, en sortie du brûleur (30), étant maintenue par réglage (33) du débit d'air chaud dudit second flux (28) à une valeur inférieure à la température de fusion des matières minérales, le troisième flux (31) débouchant dans la conduite de raccordement (24), de façon que ce troisième flux fasse, avec les fumées (11) sortant de la chambre de réaction (22), un angle (I) compris entre 140° et 160°.

8. Procédé selon la revendication 7, **caractérisé en ce que** ledit premier flux d'air chaud (J, 27) représente 50% à 75% du flux d'air chaud total (F, 26), ledit second flux d'air chaud (28) représente 5% à 30% du flux d'air chaud total (F, 26) et ledit troisième flux d'air chaud (31) représente 15% à 30% dudit flux d'air chaud total (F, 26).

9. Procédé selon l'une des revendications 7 à 8, **caractérisé en ce que**, par réglage (23), la vitesse d'injection des fumées (11) riches en oxydes d'azote dans la chambre de réaction (22) est comprise entre 20 m/s et 40 m/s, de préférence entre 25 m/s et 35 m/s, la vitesse moyenne des fumées dans la chambre de réaction (22) est comprise entre 5 m/s et 20 m/s, de préférence entre 10 m/s et 15 m/s, et la vitesse moyenne des fumées dans la conduite précitée (24) de raccordement en aval de l'injection dudit troisième flux d'air (31) est comprise entre 8 m/s et 24 m/s, de préférence entre 12 m/s et 18 m/s.

10. Procédé selon l'une des revendications 7 à 9, **caractérisé en ce que** la vitesse axiale d'injection du combustible pulvérisé (9) dans la chambre de combustion (20) est comprise entre 10 m/s et 30 m/s et de préférence entre 10 m/s et 18 m/s, tandis que l'air sous pression (35), fourni par le brûleur(30), est injecté dans ladite chambre de combustion (20) à une vitesse supérieure à 75 m/s et de préférence supérieure à 150 m/s par une tête (35a) comportant une pluralité de buses (37) d'axes tangents à un hyperboloïde de révolution à cône asymptote d'angle au sommet compris entre 3° et 90° et de préférence entre 10° et 45°.

11. Procédé selon la revendication 10, **caractérisé en ce que** ladite tête (35a) d'injection d'air sous pression (35) induit sur l'air injecté sous pression un mouvement de rotation de même sens de rotation que le premier flux (27), et **en ce que** le mouvement de rotation du second flux (28) dans la volute (29), le mouvement de rotation du premier flux (27), et le mouvement de rotation de l'air injecté sous pression (35) créent, en combinaison, un vortex stabilisant la flamme dans la chambre de combustion (20).

12. Procédé selon l'une des revendications 7 à 11, **caractérisé en ce que** le combustible (36) est du combustible pulvérisé tel que du charbon ou un mélange de coke de pétrole et de charbon pulvérisé.

13. Procédé selon l'une des revendications 7 à 12, **caractérisé en ce que** le combustible d'appoint (34) est du fuel lourd ou des solvants de récupération.

## Claims

1. Equipment for the precalcination of pre-heated mineral materials in powdery form (8), in particular cement clinker, comprising a precalciner (2) receiving the pre-heated material (8), fed with hot air (F) by means of a duct (10, 26) connected to a cooler (5) and subdivised into at least two duct elements (27, 28, 31), the precalciner (2) consisting essentially, on the one hand, of a combustion chamber (20) which forms a reducing gas generator and with a fuel burner (30) mounted onto the combustion chamber (20) at a top portion thereof in axis of a scroll (29) surrounding the burner (30), the combustion chamber (20) being fed with hot air coming from the cooler (5) by means of a first duct element, a so-called second duct (28) connected at the level of said burner (30) and opening into the combustion chamber (20) through the scroll (29) in order to impart therein, to the hot air as injected, a rotary motion according to a first direction, on the other hand, of a reaction chamber (22) for reduction of nitrogen oxides, communicating (21) with said combustion chamber (20) and fed (3) with smokes (11) rich in nitrogen oxides coming from a firing furnace (4), these smokes passing through the reaction chamber and being mixed with hot air as dispatched by a second duct element, a so-called third hot air duct (31), coming from the subdivision of said hot air duct (10, 26) and, lastly, a material separation cyclone (25) connected to said reaction chamber (22) by means of a post-combustion duct (24) in which opens the third hot air duct (31), **characterized in that** it comprises a third duct element, a so-called first duct (27), coming from the subdivision of said hot air duct (10, 26), and opening tangentially into said combustion chamber (20) in order to impart to the hot air (J) as injected by this first duct (27), a rotary motion according to the first direction, **in that** the post-combustion duct (24) is swan-neck shaped, **in that** said burner (30) is a burner of powdered fuel, such as powdered coal or a powdered mixture of petrol coke and coal, and make-up supply fuel, and **in that** the third hot air duct (31) opens into the duct (24) for connection to the cyclone (25), so that the hot air flow coming from this third duct (31) makes an angle (I) comprised between 140° and 160° with the smokes (11) coming from the reaction chamber (22).

2. Equipement according to claim 1, **characterized in that** the smokes rich in nitrogen oxides are injected into the reaction chamber (22) via a control valve (23), whereas at least one valve (32) controls the hot air flow (F) reaching the three above-mentioned ducts (27, 28, 31), and **in that** said second duct (28) and said third duct (31) are each one provided with at least one control valve (33).

3. Equipement according to claim 1 or 2, **characterized in that** the above-mentioned burner (30) is constituted by at least three concentric envelopes defining, from the inside to the outside, a central passage (34), a channel (35) and an other channel (36), respectively, which conveys a make-up supply fuel, an air under pressure and a powdered fuel carried by a gaseous flow such as air, respectively.

4. Equipment according to claim 3, **characterized in that** the air under pressure is injected into the combustion chamber (20) by means of a plurality of nozzles (37) of axes which are tangent to an hyperboloid of revolution which induces a rotary motion with a same direction as that of the hot air coming from the scroll (29) and said first duct (27), respectively.

5. Equipement according to claim 4, **characterized in that** the asymptotic cone of the hyperboloid of revolution has an apex angle comprised between 3° and 90°, and preferably between 10° and 45°.

6. Equipement according to claim 4 or 5, **characterized in that** the plurality of nozzles (37) belongs to a particular head (35a) of the burner (30).

7. Method for the precalcination of mineral materials in powdery form, in particular cement clinker, consisting in pre-heating (1) the material and calcining the pre-heated material (8) in a precalciner (2) fed with hot air (F, 26) from a cooler (5) by means of a duct (10, 26) which is subdivised into three flows (27, 28, 31) and comprises, on the one hand, a combustion chamber (20) operating as a generator of reducing gas such as CO and H₂ and fed by a first flow (27) connected tangentially to the combustion chamber (20), in order to impart a rotary motion to the hot air (J) of this first flow (27), and by a second flow (28) of said hot air (F) coming at the level of a powdered fuel and make-up supply fuel burner (30), mounted onto the combustion chamber (20) and opening into the combustion chamber (20) through a scroll (29), and imparting to the hot air the same rotation direction as that of the first flow (27), a reaction chamber (22) for reduction of nitrogen oxides which communicates with the combustion chamber (20) and is fed with smokes (11) rich in nitrogen oxides coming (3) from a firing furnace (4) and, on the other hand, a material separation cyclone (25) connected to the reaction chamber (22) by means of a connecting duct (24) into which is injected the third flow (31) of said hot air (F) and in which is produced a post-combustion, said first flow (J,27) of said hot air (F) representing from 40% to 85% of the total hot air flow (F), whereas said second flow (28) represents from 5% to 30% of the total hot air flow (F) and the third flow (31) represents from 10% to 40% of the total hot air flow (F), these hot air flow rates being respectively obtained by controlling (32, 33) the flows, and the maximum output temperature of the burner (30) being maintained by controlling (33) the hot air flow rate of said second flow (28) at a value which is lower than the melting temperature of the mineral materials, the third flow (31) opening into the connecting duct (24), so that this third flow makes an angle (I) comprised between 140° and 160° with the smokes (11) coming from the reaction chamber (22).

8. Method according the claim 7, **characterized in that** said first hot air flow (J, 27) represents from 50% to 75% of the total hot air flow (F, 26), said second hot air flow (28) represents from 5% to 30% of the total hot air flow (F, 26) and said third hot air flow (31) represents from 15% to 30% of said total hot air flow (F,26).

9. Method according to one of claims 7 to 8, **characterized in that**, by means of a control (23), the speed of injection of the smokes (11) rich in nitrogen oxides into the reaction chamber (22) is comprised between 20 m/s and 40 m/s, preferably between 25 m/s and 35 m/s, the mean speed of the smokes in the reaction chamber (22) is comprised between 5 m/s and 20 m/s, preferably between 10 m/s and 15 m/s, and the mean speed of the smokes in the above-mentioned connecting duct (24) downstream the injection of said third air flow (31) is comprised between 8 m/s and 24 m/s, preferably between 12 m/s and 18 m/s.

10. Method according to one of claims 7 to 9, **characterized in that** the axial speed of injection of the powdered fuel (9) into the combustion chamber (20) is comprised between 10 m/s and 30 m/s and preferably between 10 m/s and 18 m/s, whereas the air under pressure (35), supplied by the burner (30), is injected into said combustion chamber (20) at a speed which is higher than 75 m/s and preferably higher than 150 m/s by means of a head (35a) comprising a plurality of nozzles (37) of axes which are tangent to an hyperboloid of revolution having an asympotic cone of an apex angle comprised between 3° and 90°, and preferably between 10° and 45°.

11. Method according to claim 10, **characterized in that** said head (35a) for injecting air under pressure (35) induces, on the air which is injected under pressure, a rotary motion with the same direction as that of the first flow (27), and **in that** the rotary motion of the second flow (28) in the scroll (29), the rotary motion of the first flow (27), and the rotary motion of the air which is injected under pressure (35) creates, in combination, a vortex for stabilizing the flame in the combustion chamber (20).

12. Method according to one of claims 7 to 11, **characterized in that** the fuel (36) is a powdered fuel such as powdered coal or a powdered mixture of petrol coke and coal.

13. Method according to one of claims 7 to 12, **characterized in that** the make-up supply fuel (34) is an heavy fuel or recuperation solvents.

## Patentansprüche

1. Anlage zum Vorkalzinieren von Mineralstoffen in pulverförmiger vorgeheizter Gestalt (8), insbesondere von Zementklinkern, mit einem den vorgeheizten Stoff (8) empfangenden Vorkalzinator (2), der mit Heissluft (F) von einer mit einem Kühler (5) verbundenen und zumindest in zwei Leitungselemente (27, 28, 31) unterteilten Leitung (10, 26) gespeist wird, wobei der Vorkalzinator (2) im wesentlichen einerseits aus einer, reduzierende Gase bildenden Brennkammer (20) mit einem auf dem oberen Teil, in der Achse einer den Brenner (30) umschliessenden Spirale, der Brennkammer (20) angeordneten Brennstoffbrenner (30) besteht, die Brennkammer (20) mit aus dem Kühler (5) durch ein erstes Leitungselement, genannt zweite Leitung (28), kommender Heissluft gespeist wird, das in der Höhe des besagten Brenners (30) angeschlossen ist und in die Brennkammer (20) durch die Spirale (29) so mündet, dass der so eingeblasenen Heissluft eine Drehbewegung in einer ersten Richtung verliehen wird, andererseits aus einer Reaktionskammer (22) durch Reduktion von Stickstoffoxiden, die mit der besagten Brennkammer (20) kommuniziert (21) und mit aus einem Brennofen (4) kommenden Rauchen (11), die reich an Stickstoffoxiden sind, gespeist wird, wobei diese Rauche die Reaktionskammer durchfliessen und mit Heissluft gemischt werden, die durch ein zweites Leitungselement, genannt dritte Heissluftleitung (31) zugeführt wird, das aus der Unterteilung der besagten Heissluftleitung (10, 26) resultiert, und schliesslich aus einem Zyklon (25) zur Stoffabscheidung, der mit der Reaktionskammer (22) durch eine Nachbrennleitung (24) verbunden ist, in welche die dritte Heissluftleitung (31) mündet, **dadurch gekennzeichnet, dass** sie ein drittes Leitungselement, genannt erste Leitung (27) enthält, das aus der Unterteilung der besagten Heissluftleitung (10, 26) résultiert und das tangential in die besagte Brennkammer (20) mündet, um der von der ersten Leitung (27) eingespritzten Heissluft (J) eine Drehbewegung in einer ersten Richtung zu verleihen, dass die Nachbrennleitung (24) schwanenhalsförmig ausgebildet ist, dass dieser Brenner (30) ein Brenner für pulverförmige Brennstoffe ist, wie Kohle oder ein Gemisch aus Petrolkoks und pulverförmiger Kohle, und Zusatzbrennstoff, und dass die dritte Heissluftleitung (31) derart in die Anschlussleitung (24) zum Zyklon (25) mündet, derart, dass der aus dieser dritten Leitung (31) ausfliessende Heissluftstrom mit den aus der Reaktionskammer (22) austretenden Rauchen (11) einen Winkel (I) zwischen 140° und 160° bildet.

2. Anlage gemäss Anspruch 1, **dadurch gekennzeichnet, dass** die an Stickstoffoxiden reiche Rauche in die Reaktionskammer (22) über ein Regelventil (23) eingespritzt werden, während wenigstens ein Ventil (32) die zu den drei vorgenannten Leitungen (27, 28, 31) gelangende Heissluftdurchsatzmenge einstellt, und dass die zweite vorgenannte Leitung (28) und die dritte vorgenannte Leitung (31) jeweils mit wenigstens einem Regelventil (33) versehen sind.

3. Anlage gemäss Anspruch 1 oder 2, **dadurch gekennzeichnet, dass** der vorgenannte Brenner (30) durch wenigstens drei konzentrische Hüllen gebildet wird die, von der Innenseite nach der Aussenseite hin, einen zentralen Durchgang (34), einen Kanal (35) und einen weiteren Kanal (36) definieren, die jeweils einen Zusatzbrennstoff, Druckluft und einen zerstäubten, mittels eines gasförmigen Stroms, wie Luft, beförderten Brennstoff befördern.

4. Anlage gemäss Anspruch 3, **dadurch gekennzeichnet, dass** die Druckluft in die Brennkammer (20) durch eine Mehrzahl von Düsen (37) eingeblasen wird, deren Achsen ein Umdrehungshyperboloid tangieren, wobei eine Drehbewegung in derselben Richtung wie die der jeweils aus der Spirale (29) und der vorgenannten ersten Leitung (27) austretenden Heissluft verliehen wird.

5. Anlage gemäss Anspruch 4, **dadurch gekennzeichnet, dass** der asymptotische Konus des Umdrehungshyperboloids einen zwischen 3° und 90° und in bevorzugter Weise einen zwischen 10° und 45° liegenden kegelspitzen Winkel hat.

6. Anlage gemäss Anspruch 4 oder 5, **dadurch gekennzeichnet, dass** die Mehrzahl der Düsen (37) zu einem Sonderkopf (35a) des Brenners (30) gehören.

7. Verfahren zum Vorkalzinieren von Mineralstoffen in pulverförmiger Gestalt, insbesondere von Zementklinkern, das darin besteht, den Stoff vorzuheizen (1) und den vorgeheizten Stoff (8) in einem Vorkalzinator (2) zu kalzinieren, der mit aus dem Kühler (5) kommender Heissluft (F, 26) gespeist wird, durch eine in drei Ströme (27, 28, 31) aufgeteilte Leitung (10, 26) und einerseits, eine als Generator reduzierender Gase wie CO und H₂ funktionierende Brennkammer (20) aufweist, die von einem ersten, tangential an die Brennkammer (20) angeschlossenen Strom (27) gespeist wird, um der Heissluft (J) dieses ersten Stromes (27) eine Drehbewegung zu verleihen, und durch einen zweiten Strom (28) dieser Heissluft (F), eintreffend auf der Höhe eines Brenners (30) von zerstäubtem Brennstoff und von Zusatzbrennstoff, der auf der Brennkammer (20) angebracht ist und in die Brennkammer (20) durch eine Spirale (29) hindurch mündet, und der der Heissluft dieselbe Drehbewegung erteilt wie die des ersten Stromes (27), wobei eine Reaktionskammer (22) durch Reduzierung von Stickstoffoxiden, mit der Brennkammer (20) kommuniziert und mit an Stickstoffoxiden reichen, aus einem Brennofen (4) kommenden Rauchen (11), gespeist wird, und andererseits, einen Zyklon (25) zur Stoffabscheidung aufweist, der an die Reaktionskammer (22) durch eine Anschlussleitung (24) angeschlossen ist, in welche der dritte Strom (31) der vorgenannten Heissluft (F) eingespritzt wird, und wo eine Nachbrennung stattfindet, wobei der besagte erste Strom (J, 27) der besagten Heissluft (F) 40% bis 85% des gesamten Heissluftstroms (F) beträgt, wohingegen der besagte zweite Strom (28) 5% bis 30% des gesamten Heissluftstroms (F) beträgt, und der dritte Strom (31) 10% bis 40% des gesamten Heissluftstroms (F) beträgt, wobei diese Heissluftdurchsätze jeweils durch Regulierung (32, 33) dieser Flüsse erhalten werden, und die Maximaltemperatur am Ausgang des Brenners (30) durch Regulierung (33) des Heissluftdurchsatzes des zweiten Stromes (28) auf einen Wert, der geringer als die Schmelztemperatur der Mineralstoffe ist, aufrechterhalten wird, wobei der dritte Strom (31) so in die Anschlussleitung (24) mündet, dass der dritte Strom, mit den aus der Reaktionskammer (22) austretenden Gasen, einen Winkel (I) zwischen 140° und 160° bildet.

8. Verfahren gemäss Anspruch 7, **dadurch gekennzeichnet, dass** der erste Heissluftstrom (J, 27) 50% bis 75% des Gesamtheissluftstromes (F, 26) darstellt, der zweite Heissluftstrom (28) 5% bis 30% des Gesamtheissluftstromes (F, 26) darstellt, und der dritte Heissluftstrom (31) 15% bis 30% des besagten Gesamtheissluftstromes (F, 26) darstellt.

9. Verfahren gemäss einem der Ansprüche 7 bis 8, **dadurch gekennzeichnet, dass** durch Regulierung (23), die Einspritzgeschwindigkeit der Rauche (11), die reich an Stickstoffoxiden sind, in der Reaktionskammer (22) zwischen 20 m/s und 40 m/s liegt, vorzugsweise zwischen 25 m/s und 35 m/s, die mittlere Geschwindigkeit der Rauche in der Reaktionskammer (22) zwischen 5 m/s und 20 m/s liegt und vorzugsweise zwischen 10 m/s und 15 m/s beträgt, und die mittlere Geschwindigkeit der Rauche in der vorgenannten Anschlussleitung (24) stromabwärts der Einspritzung des dritten Luftstromes (31) zwischen 8 m/s und 24 m/s und in bevorzugter Weise zwischen 12 m/s und 18 m/s beträgt.

10. Verfahren gemäss einem der Ansprüche 7 bis 9, **dadurch gekennzeichnet, dass** die axiale Einspritzgeschwindigkeit des pulverförmigen Brennstoffs (9) in der Brennkammer (20) zwischen 10 m/s und 30 m/s und in bevorzugter Weise zwischen 10 m/s und 18 m/s beträgt, während die vom Brenner (30) gelieferte Druckluft (35) in die besagte Brennkammer (20) mit einer Geschwindigkeit über 75 m/s und in bevorzugter Weise über 150 m/s mittels eines Kopfes (35a), der eine Mehrzahl von Düsen (37) aufweist, eingeblasen wird, deren Achsen ein Umdrehungshyperboloid tangieren, das einen asymptotischen Konus aufweist, mit einem zwischen 3° und 90°, und in bevorzugter Weise zwischen 10° und 45° liegenden kegelspitzen Winkel.

11. Verfahren gemäss Anspruch 10, **dadurch gekennzeichnet, dass** der besagte Kopf (35a) zum Einspitzen von Druckluft (35) der besagten eingespritzten Druckluft eine Drehbewegung in derselben Drehrichtung wie der erste Strom (27) verleiht, und dass die Drehbewegung des zweiten Stromes (28) in der Spirale (29), die Drehbewegung des ersten Stromes (27), die Drehbewegung der unter Druck eingespritzten Luft (35) zusammen einen die Flamme in der Brennkammer (20) stabilisierenden Wirbel bilden.

12. Verfahren gemäss einem der Ansprüche 7 bis 11, **dadurch gekennzeichnet, dass** der Brennstoff (36) zerstäubter Brennstoff ist, wie Kohle oder eine Mischung aus Petrolkoks und zerstäubter Kohle.

13. Verfahren gemäss einem der Ansprüche 7 bis 12, **dadurch gekennzeichnet, dass** der Zusatzbrennstoff (34) schweres Heizöl oder rückgewonnene Lösungsmittel sind.
